# EUROPÄISCHE PATENTSCHRIFT

(11) **EP 2 166 300 B1**
(45) Veröffentlichungstag und Bekanntmachung des Hinweises auf die Patenterteilung: **29.11.2017**
(21) Anmeldenummer: 09012006.4
(22) Anmeldetag: 22.09.2009
(51) Int. Cl.: F28F 21/06

(54) **Klimaanlage und Verfahren zur Herstellung einer Klimaanlage**
Air conditioning device and method for manufacturing same
Climatisation et procédé de fabrication d'une climatisation

(30) Priorität: 22.09.2008 DE 102008048385
(43) Veröffentlichungstag der Anmeldung: 24.03.2010
(73) Patentinhaber: MAHLE Behr GmbH & Co. KG, 70469 Stuttgart (DE)
(72) Erfinder: Kroner, Peter, 70825 Korntal-Münchingen (DE); Schaper, Jörg, 70806 Kornwestheim (DE)
(74) Vertreter: Grauel, Andreas

(56) Entgegenhaltungen:
- EP-A2- 1 946 638
- EP-B1- 0 409 130
- DE-A1-102006 010 858
- JP-A- S59 124 428
- US-A1- 2005 182 152

## Beschreibung

Die Erfindung betrifft eine Klimaanlage gemäß dem Oberbegriff von Anspruch 1. EP 1 946 638 zeigt eine Klimaanlage nach dem Oberbegriff des Anspruchs 1. Regelmäßig ist ein Wärmetauscher, insbesondere ein Verdampfer, Teil einer Klimaanlage. Aufgrund der bei einem Wärmetauscher herrschenden Temperatur- und Feuchte-Umgebungen finden sich vergleichsweise gute Wachstumsbedingungen für Mikroorganismen wie Bakterien und Pilze, die sich in der Luft befinden. Diese können Stoffwechselprodukte erzeugen, welche wenigstens unangenehme Gerüche verursachen können. Insbesondere kann dies die Bildung von Biofilmen und die Entstehung von permanent unangenehmen Modergerüchen verursachen. Im Falle eines Verdampfers ergibt sich im Betrieb aufgrund der Verdunstungskälte des Kältemittels des Verdampfers eine vergleichsweise kalte Umgebung des Verdampfers. Die Folge ist eine konstante Kondensation von Luftfeuchtigkeit im Verdampfer sowie an diesem umgebenden Kunststoffgehäuse und an den zur Abdichtung verwendeten Schäumen, was die Bildung von Biomasse erheblich begünstigt.

So ist es beispielsweise aus EP 0 409 130 B1 oder aus FR 2 837 272 zur Vermeidung der oben genannten Probleme bekannt einen Wärmetauscher oder einen Verdampfer mit einem Schutzfilm, enthaltend ein antimikrobielles Mittel, zu versehen. Gemäß EP 0 409 130 B1 kann ein solcher Schutzfilm in Form eines Harzüberzugs aus einem organischen Polymer gebildet sein. In DE 102 25 324 A1 ist darüber hinaus ein Verfahren zur Herstellung einer antimikrobiellen Beschichtung offenbart, welche ein Bakterienwachstum auf den beschichteten Flächen teilweise oder vollständig unterdrücken soll. Als Substratwerkstoff für das Aufbringen der antimikrobiellen Schicht eignen sich alle Arten von Kunststoffen und Metall sowie Holz, Emaille und Keramiken.

Zwar werden durch die vorgenannten Maßnahmen des Standes der Technik direkt an einem Verdampfer oder einem Wärmetauscher die oben genannten Probleme gemindert, doch lässt sich die Ausbreitung der in der Luft befindlichen Mikroorganismen vom Verdampfer in die übrigen Teile einer Klimaanlage dadurch nur unzuverlässig eindämmen. Wünschenswert wäre es, die oben genannten Probleme auch in anderen Teilen einer Klimaanlage zu mindern.

An dieser Stelle setzt die Erfindung an, deren Aufgabe es ist, eine Klimaanlage anzugeben, die es ermöglicht, Mikroorganismen auch in übrigen Teilen der Klimaanlage zu reduzieren und dennoch die Herstellungskosten einer Klimaanlage vergleichsweise gering zu halten.

Betreffend die Klimaanlage wird die Aufgabe durch die Erfindung mittels einer Klimaanlage nach Anspruch 1 gelöst.

Die Erfindung geht von der Überlegung aus, dass die Anordnung eines Biozids in einem übrigen Teil der Klimaanlage in erheblichem Maße zur Verringerung von Biofilmen und den daraus entstehenden gegebenenfalls unangenehmen Modergerüchen beitragen kann - dies insbesondere, weil weitere Klimaanlagenbauteile gegebenenfalls näher an einer Fahrgastzelle angeordnet sind oder stärkere Luftstromberührung haben. Darüber hinaus hat die Erfindung erkannt, dass die Einbringung eines Biozids in einem Kunststoff-Werkstoff besonders effektiv im Rahmen eines Herstellungsverfahrens implementiert werden kann, so dass die vorteilhafte Wirkung des Konzepts der Erfindung auch unter günstigen Herstellungsbedingungen erreicht werden kann. Die Erfindung geht dabei von der Überlegung aus, dass inzwischen große Teile von weiteren Klimaanlagenbauteilen - neben Teilen eines Wärmetauschers - aus einem Kunststoff-Werkstoff bestehen. Insofern nutzt das Konzept der Erfindung die Synergiewirkung zwischen Kunststoff-Werkstoffbauteilen der Klimaanlage und die Möglichkeiten einer Einbringung von Bioziden in einen Kunststoff-Werkstoff.

In besonders bevorzugter Weise lässt sich das Konzept der Erfindung weiterbilden, indem wenigstens das weitere Klimaanlagenbauteil vollständig oder teilweise aus einem biozidhaltigen Kunststoff-Werkstoff besteht. Grundsätzlich könnte der biozidhaltige Kunststoff-Werkstoff als Beschichtung auf ein Klimaanlagenbauteil ganz oder teilweise aufgebracht werden; es hat sich darüber hinaus gezeigt, dass es kostengünstiger ist, das Klimaanlagenbauteil aus einem ein Biozid enthaltenden Kunststoff vollständig oder teilweise herzustellen, d.h. von einer separaten biozidhaltigen Beschichtung abzusehen und stattdessen das Bauteil als solches aus einem biozidhaltigen Kunststoff-Werkstoff vollständig oder teilweise herzustellen.

In einer weiteren besonders bevorzugten Weiterbildung hat es sich als vorteilhaft erwiesen, dass der Wärmetauscher, insbesondere ein Verdampfer oder eine Heizung od.dgl., ein biozides Material aufweist. Zwar erlaubt das Konzept der Erfindung auch Weiterbildungen gemäß denen ein Wärmetauscher frei von biozidem Material ist; es hat sich jedoch als besonders bevorzugt erwiesen, dass die Quelle von hohen Mikroorganismenkonzentrationen - ein Wärmetauscher - als auch dessen Peripherie der Klimaanlage - wenigstens ein weiteres Klimaanlagenbauteil - einen biozidhaltigen Kunststoff-Werkstoff aufweist. Bevorzugt kann ein Kunststoffteil eines Wärmetauschers vollständig oder teilweise mit einem biozidhaltigen Kunststoff-Werkstoff hergestellt sein.

Demgemäß ist in einer als besonders bevorzugt anzusehenden Weiterbildung des Konzepts der Erfindung vorgesehen, dass wenigstens das weitere Klimaanlagenbauteil vollständig oder teilweise aus einem biozidhaltigen Kunststoff-Werkstoff besteht und der Wärmetauscher ein biozides Material aufweist. Soweit Teile des Wärmetauschers aus Kunststoff bestehen, kann dieses ein biozidhaltiger Kunststoff-Werkstoff sein. Darüber hinaus ist zusätzlich oder alternativ auch eine Beschichtung des Wärmetauschers mit einem bioziden Material möglich, insbesondere Nicht-Kunststoffteile des Wärmetauschers.

Entsprechend führt das Konzept der Erfindung auch auf ein Verfahren zur Herstellung einer Klimaanlage aufweisend einen Wärmetauscher und wenigstens ein weiteres Klimaanlagenbauteil. Dabei ist vorgesehen, dass das weitere Klimaanlagenbauteil vollständig oder teilweise aus einem biozidhaltigen Kunststoff-Werkstoff hergestellt wird und der Wärmetauscher mit einem bioziden Material versehen wird.

So kann im Rahmen einer Weiterbildung vorteilhaft ein biozides Material zur Darstellung des biozidhaltigen Kunststoff-Werkstoffs in einem geeigneten Verfahrensschritt eingebracht werden, beispielsweise in einem Spritzgussschritt, einem Diffundierschritt, einem Extrudierschritt, einem Schäumschritt od.dgl.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Grundsätzlich kann ein biozidhaltiger Kunststoff-Werkstoff auf Grundlage eines für das entsprechende Klimaanlagenbauteil geeigneten Kunststoff-Werkstoffs dargestellt werden. So hat sich insbesondere ein Kunststoff-Werkstoff aus der Gruppe bestehend aus: Thermoplaste, Duroplaste, Elastomere od.dgl. als vorteilhaft erwiesen. Insbesondere eignen sich Polymere, vorzugsweise Polyethylen, Polypropylen, Polyvinylchlorid, Polystyrol, Polyurethan, Polyethylenterephthalat, Polyamid oder Polybuthylen.

Als besonders bevorzugtes biozides Material hat sich ein organisches oder anorganisches Material erwiesen. Grundsätzlich ist unter einem bioziden Material auch jedes andere Material mit Wirkung insbesondere gegen Mikroorganismen zu verstehen. Besonders bevorzugt sind Materialien mit bakterizider Wirkung und/oder fungizider Wirkung od.dgl.

Als besonders bevorzugt zum Einsatz bei einer Klimaanlage hat sich ein biozides Material enthaltend einen oder mehrere Biozid-Stoffe erwiesen, die ausgewählt sind aus der Gruppe bestehend aus: Silber oder Silberverbindungen, insbesondere Silbersalze, Kupfer oder Kupferverbindungen, insbesondere Kupfersalze, Pyrithion-Verbindungen, insbesondere Natriumpyrithion, Zinkpyrithion od. dgl., Benzimidazole, wie Thiabendazol od. dgl., Octylisothiazolon, Dichloroctylisothiazolon, Zinn oder Zinnverbindungen, insbesondere Zinnsalze.

Es hat sich gezeigt, dass sich ein biozides Material besonders vorteilhaft als ein feindisperses Material, beispielsweise als ein feindisperses Material aus Partikeln oder Granulen od.dgl., in einem Kunststoff-Werkstoff einbringen lässt. Die Biozidwirkung des biozidhaltigen Kunststoff-Werkstoffs lässt sich verstärken je kleiner die Partikel oder Granulen od.dgl. des feindispersen Materials sind; besonders geeignet sind Mikro- und/oder Nano-Partikel.

Während sich grundsätzlich jedes weitere Klimaanlagenbauteil eignet, um mit dem biozidhaltigen Kunststoff-Werkstoff versehen zu werden und insbesondere aus dem biozidhaltigen Kunststoff-Werkstoff hergestellt zu werden, so hat sich dennoch als besonders vorteilhaft erwiesen, ein weiteres Klimaanlagenbauteil herzustellen, das ausgewählt ist aus der Gruppe bestehend aus: wenigstens einem weiteren Wärmetauscher, wie einem Verdampfer, einer Heizung oder dgl.; einem Belüftungselement, insbesondere einem Rohr, einer Düse oder einem dgl. Element einer Belüftungsanlage; einem Ansaugelement, insbesondere einem Rohr, einer Düse oder dgl. Element eines Ansaugtraktes; einem Dichtungs- und/oder Dämm-Element; einem Filterelement; einem Gebläse; einem Gehäusebauteil. Erfindungsgemäß ist ein Regelelement vorgesehen, wie einem Mischelement, einem Verteilerelement, einer Klappe, einer Anordnung mehrerer Klappen, wie eine Jalousie, oder einem Tor. Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:

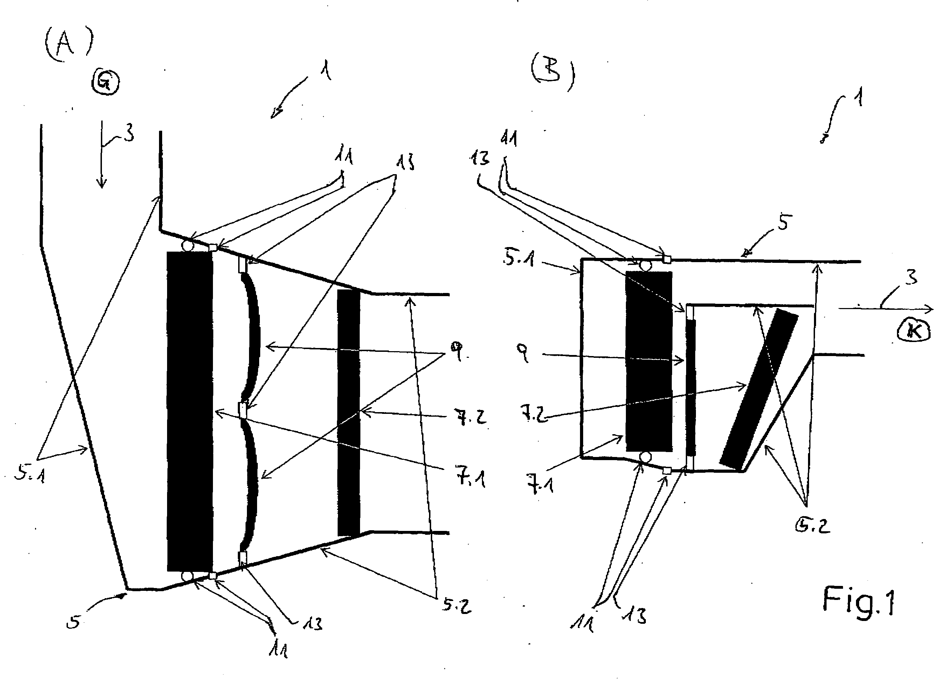

- Fig. 1:: eine Klimaanlage gemäß einer bevorzugten Ausführungsform in einer Draufsicht (A) und Seitenansicht (B).

Fig. 1 zeigt in schematischer Darstellung eine Klimaanlage 1, wie sie beispielsweise in einem Fahrzeug, insbesondere einem Kraftfahrzeug, wie einem PKW oder LKW od.dgl., eingebaut werden kann. Die Klimaanlage 1 saugt üblicherweise Luft 3 aus der Umgebung von einem vorliegend nicht näher dargestellten Gebläse G od.dgl. an, wobei die Luft 3 durch das eine Luftführung ausbildende Gehäuse 5 weiter zu Luftkanälen K transportiert wird, die vorliegend ebenfalls nicht im Einzelnen dargestellt sind. Das Gehäuse 5 kann dazu, wie vorliegend dargestellt, einen ersten Gehäuseteil 5.1 und einen zweiten Gehäuseteil 5.2 aufweisen.

Es ist außerdem vorgesehen, dass ein erster Gehäuseteil 5.1 zur Aufnahme eines ersten Wärmetauschers 7.1 in Form eines Verdampfers vorgesehen ist, während der zweite Gehäuseteil 5.2 zur Aufnahme eines zweiten Wärmetauschers 7.2 in Form einer Heizung vorgesehen ist. Die Wärmetauscher 7.1, 7.2 haben sich als wesentliche Quelle zur Erzeugung und Vermehrung von in der Luft 3 enthaltenden Mikroorganismen erwiesen. Bei der vorliegenden Ausführungsform ist sowohl der Verdampfer als auch die Heizung mit einem bioziden Material versehen, um insbesondere die Quelle der Mirkoorganismen, so weit es möglich ist, zu reduzieren und damit eine etwaige Geruchsbelastung der in die Luftkanäle K abgegebenen Luft 3 zu verringern.

Gemäß dem Konzept der Erfindung ist bei der hier dargestellten Ausführungsform darüber hinaus vorteilhaft erreicht, dass die Gesamtbelastung der Klimaanlage 1 mit Biomasse gering gehalten ist. Dazu sind weitere Klimaanlagenbauteile vollständig aus einem biozidhaltigen Kunststoff-Werkstoff hergestellt. Im Einzelnen sind dies vorliegend als biozidhaltige Kunststoffklappen ausgebildete Regelelemente 9. Diese können auch als Jalousie mit einer Mehrzahl von Klappen aus biozidhaltigem Kunststoff ausgebildet sein. Diese sind bei der hier dargestellten Klimaanlage 1 zwischen den Wärmetauschern 7.1 und 7.2 angeordnet und regeln je nach Öffnungswinkel den Luftstrom 3 vom Gebläse G zu den Luftkanälen K. Die Klappen aus biozidhaltigem Kunststoff-Werkstoff können vorliegend im Rahmen eines Spritzgussprozesses hergestellt werden, bei dem biozidhaltige Polymergranulen, beispielsweise im Rahmen eines so genannten "Masterbatches", eingebracht werden. Das Herstellungsverfahren der Klappen wird praktisch kaum beeinflusst, nämlich nur durch die Einbringung eines weiteren Additivs in Form des Masterbatches aus biozidhaltigen Polymergranulen.

Ebenso kann das Gehäuse 5 vollständig oder teilweise, beispielsweise der erste und/oder zweite Gehäuseteil 5.1, 5.2 aus einem biozidhaltigen Kunststoff-Werkstoff bestehen.

Darüber hinaus sind bei der vorliegend dargestellten Klimaanlage 1 sowohl Dichtungen 11 zwischen dem Wärmetauscher 7.1 in Form des Verdampfers und dem ersten Gehäuseteil 5.1 als auch Dichtungen 13 an den Regelelementen 9 in Form der Klappen aus biozidhaltigem Kunststoff-Werkstoff hergestellt. Dazu ist vorliegend als Dicht- bzw. Dämmmaterial für die Dichtungen 11, 13 in der Klimaanlage 1 ein biozidhaltiger Schaum und/oder biozidhaltige Elastomere vorgesehen. Zur Herstellung kann bei den Schäumen bzw. Elastomeren das Biozid beispielsweise wiederum im Rahmen eines zusätzlichen Additivs, insbesondere als "Masterbatch", direkt dem aufzuschäumenden und/oder zu extrudierenden Polymermaterial zugesetzt werden. Für den Fall, dass ein Aufschäum- und/oder Extrudierprozeß für das Polymermaterial der Dichtungen 11, 13 nicht mit einem Biozid-Additiv ergänzt werden soll, kann das Biozid auch nachträglich durch Eindiffundieren in ein fertiges Dicht- bzw. Dämmmaterial eingebracht werden.

Als Biozid-Additiv eignet sich grundsätzlich jeder Biozid-Stoff, der eine Wirkung gegen Mirkoorganismen entfaltet, insbesondere ein Biozid-Stoff, wie er in dem allgemeinen Teil der Beschreibung genannt ist.

Zusammenfassend betrifft die Erfindung eine Klimaanlage 1 aufweisend einen Wärmetauscher 7.1, 7.2, insbesondere Verdampfer od. dgl., und wenigstens ein weiteres Klimaanlagenbauteil, - beispielsweise ein Bauteil 5, 5.1, 5.2, 9, 11, 13 - wobei das weitere Klimaanlagenbauteil einen biozidhaltigen Kunststoff-Werkstoff aufweist.

### Bezugszeichenliste

- 1: Klimaanlage
- 3: Luft
- 5: Gehäuse
- 5.1: erster Gehäuseteil
- 5.2: zweiter Gehäuseteil
- 7.1: erster Wärmetauscher
- 7.2: zweiter Wärmetauscher
- 9: Regelelemente
- 11: Dichtungen
- 13: Dichtungen

- G: Gebläse
- K: Luftkanäle

## Patentansprüche

1. Klimaanlage (1) aufweisend einen Verdampfer (7.1) und eine Heizung (7.2) in einem als Luftführung ausgebildeten Gehäuse, und wenigstens ein weiteres Klimaanlagenbauteil, **dadurch gekennzeichnet, dass** wenigstens das weitere Klimaanlagenbauteil einen biozidhaltigen Kunststoff-Werkstoff aufweist, wobei das weitere Klimaanlagenbauteil Regelelemente sind, die als biozidhaltige Kunststoffklappen ausgebildet sind, welche zwischen dem Verdampfer und der Heizung angeordnet sind.

2. Klimaanlage (1) nach Anspruch 1, **dadurch gekennzeichnet, dass** wenigstens das weitere Klimaanlagenbauteil vollständig oder teilweise aus einem biozidhaltigen Kunststoff-Werkstoff besteht.

3. Klimaanlage (1) nach Anspruch 1 oder 2, **dadurch gekennzeichnet, dass** der Verdampfer und/oder die Heizung ein biozides Material aufweist.

4. Klimaanlage (1) nach einem der Ansprüche 1 bis 3, **dadurch gekennzeichnet, dass** ein biozidhaltiger Kunststoff-Werkstoff ausgewählt ist aus der Gruppe bestehend aus:
Thermoplaste, Duroplaste, Elastomere; insbesondere Polymere, vorzugsweise PE, PP, PVC, Polystyrol, PU, PET, PA, PB.

5. Klimaanlage (1) nach einem der Ansprüche 1 bis 4, **dadurch gekennzeichnet, dass** ein biozides Material, insbesondere organisches oder anorganisches, ein Material mit Wirkung insbesondere gegen Mikroorganismen ist, insbesondere ein Material mit bakterizider Wirkung und/oder fungizider Wirkung od.dgl.

6. Klimaanlage (1) nach einem der Ansprüche 1 bis 5, **dadurch gekennzeichnet, dass** ein biozides Material einen oder mehrere Biozid-Stoffe enthält aus der Gruppe bestehend aus: Silber oder Silberverbindungen, insbesondere Silbersalze, Kupfer oder Kupferverbindungen, insbesondere Kupfersalze, Pyrithion-Verbindungen, insbesondere Natriumpyrithion, Zinkpyrithion od. dgl., Benzimidazole, wie Thiabendazol od. dgl., Octylisothiazolon, Dichloroctylisothiazolon, quartäre Ammoniumsalze, Chlormethylisothiazolinon, Zinn oder Zinnverbindung, insbesondere Zinnsalze.

7. Klimaanlage (1) nach einem der Ansprüche 1 bis 6, **dadurch gekennzeichnet, dass** ein biozides Material als ein feindisperses Material aus Partikeln oder Granulen eingebracht ist, insbesondere ein Material aufweisend Mikro-, insbesondere Nano-, Partikel oder Granulen.

8. Klimaanlage (1) nach einem der Ansprüche 1 bis 7, **dadurch gekennzeichnet, dass** zumindest ein zusätzliches weiteres Klimaanlagenbauteil ausgewählt ist aus der Gruppe bestehend aus:
einem Belüftungselement, insbesondere einem Rohr, einer Düse oder
einem dgl. Element einer Belüftungsanlage;
einem Ansaugelement, insbesondere einem Rohr, einer Düse oder
dgl. Element eines Ansaugtraktes;
einem Dichtungs- und/oder Dämm-Element; einem Filterelement; einem Gebläse;
einem Gehäusebauteil (5.1, 5.2).

9. Klimaanlage (1) nach einem der Ansprüche 1 bis 8, **dadurch gekennzeichnet, dass** wenigstens das weitere Klimaanlagenbauteil vollständig oder teilweise aus einem biozidhaltigen Kunststoff-Werkstoff besteht und der Verdampfer und/oder die Heizung ein biozides Material aufweist, insbesondere mit einem bioziden Material beschichtet ist.

## Claims

1. An air-conditioning system (1) having an evaporator (7.1) and a heating (7.2) in a housing formed as an air guide, and at least one further air-conditioning system component, **characterised in that** the at least one further air-conditioning system component has a biocide-containing plastic material, wherein the further air-conditioning system component are regulating elements which are formed as biocide-containing plastic flaps which are arranged between the evaporator and the heating.

2. The air-conditioning system (1) according to claim 1, **characterised in that** the at least one further air-conditioning system component fully or partially consists of a biocide-containing plastic material.

3. The air-conditioning system (1) according to claim 1 or 2, **characterised in that** the evaporator and/or the heating has a biocide-containing material.

4. The air-conditioning system (1) according to one of claims 1 to 3, **characterised in that** a biocide-containing plastic material is selected from the group consisting of:
thermoplastics, thermosetting plastics, elastomers;
in particular polymers, preferably PE, PP, PVC, polystyrene, PU, PET, PA, PB.

5. The air-conditioning system (1) according to one of claims 1 to 4, **characterised in that** a biocidal material, in particular organic or inorganic, is a material which is in particular effective against microorganisms, in particular a material with a bactericidal effect and/or a fungicidal effect or the like.

6. The air-conditioning system (1) according to one of claims 1 to 5, **characterised in that** a biocidal material contains one or more biocidal substances from the group consisting of: silver or silver compounds, in particular silver salts, copper or copper compounds, in particular copper salts, pyrithione compounds, in particular sodium pyrithione, zinc pyrithione or the like, benzimidazoles such as thiabendazole or the like, octylisothiazolone, dichlorotylisothiazolone, quaternary ammonium salts, chloromethylisothiazolinone, tin or tin compound, in particular tin salts.

7. The air-conditioning system (1) according to one of claims 1 to 6, **characterised in that** a biocidal material is introduced as a finely dispersed material of particles or granules, in particular a material having micro-, in particular nanoparticles or granules.

8. The air-conditioning system (1) according to one of claims 1 to 7, **characterised in that** at least one additional further air-conditioning system component is selected from the group consisting of:
a ventilation element, in particular a tube, a nozzle or a similar element of a ventilation system;
an intake element, in particular a tube, a nozzle or
a similar element of an intake passage;
a sealing and/or insulation element; a filter element; a fan;
a housing component (5.1, 5.2).

9. The air-conditioning system (1) according to one of claims 1 to 8, **characterised in that** at least the further air-conditioning system component fully or partially consists of a biocide-containing plastic material and the evaporator and/or the heating has a biocidal material, is in particular coated with a biocidal material.

## Revendications

1. Système de climatisation (1) présentant un évaporateur (7.1) et un chauffage (7.2) disposés dans un carter configuré comme un guidage d'air, et présentant au moins un autre composant du système de climatisation, **caractérisé en ce qu'**au moins l'autre composant du système de climatisation présente un matériau à base de matière plastique contenant des produits biocides, où l'autre composant du système de climatisation est constitué par des éléments de régulation qui sont conçus comme des volets en matière plastique contenant des produits biocides, volets en matière plastique qui sont disposés entre l'évaporateur et le chauffage.

2. Système de climatisation (1) selon la revendication 1, **caractérisé en ce qu'**au moins l'autre composant du système de climatisation est constitué en totalité ou en partie par un matériau à base de matière plastique contenant des produits biocides.

3. Système de climatisation (1) selon la revendication 1 ou 2, **caractérisé en ce que** l'évaporateur et / ou le chauffage présente un matériau biocide.

4. Système de climatisation (1) selon l'une quelconque des revendications 1 à 3, **caractérisé en ce qu'**un matériau à base de matière plastique contenant des produits biocides est sélectionné parmi le groupe se composant :
de thermoplastiques, de thermodurcissables,
d'élastomères ; se composant en particulier de polymères, de préférence de PE, de PP, de PVC, de polystyrène, de PU, de PET, de PA, de PB.

5. Système de climatisation (1) selon l'une quelconque des revendications 1 à 4, **caractérisé en ce qu'**un matériau biocide, en particulier organique ou inorganique, est un matériau ayant une action en particulier contre les micro-organismes, en particulier un matériau ayant une action bactéricide et / ou une action fongicide ou une action analogue.

6. Système de climatisation (1) selon l'une quelconque des revendications 1 à 5, **caractérisé en ce qu'**un matériau biocide contient un ou plusieurs agents biocides faisant partie du groupe se composant :
d'argent ou de composés d'argent, en particulier de sels d'argent, de cuivre ou de composés de cuivre, en particulier de sels de cuivre, de composés de pyrithione, en particulier de la pyrithione de sodium, de la pyrithione de zinc ou de composés analogues, de benzimidazoles, comme du thiabendazole ou un élément analogue, de l'octylisothiazolinone, de la dichlorooctylisothiazolinone, de sels d'ammonium quaternaires, de la chlorométhylisothiazolinone, d'étain ou d'un composé d'étain, en particulier de sels d'étain.

7. Système de climatisation (1) selon l'une quelconque des revendications 1 à 6, **caractérisé en ce qu'**un matériau biocide est introduit comme un matériau finement dispersé se composant de particules ou de granules, en particulier un matériau présentant des microparticules, en particulier des nanoparticules ou des granules.

8. Système de climatisation (1) selon l'une quelconque des revendications 1 à 7, **caractérisé en ce qu'**au moins un autre composant supplémentaire du système de climatisation est sélectionné parmi le groupe qui comprend :
un élément de ventilation, en particulier un tube, une buse ou un élément analogue d'un système de ventilation ;
un élément d'aspiration, en particulier un tube, une buse ou un élément analogue d'un circuit d'aspiration ;
un élément d'étanchéité et / ou d'isolation ; un élément de filtre ; un pulseur ;
un composant de carter (5.1, 5.2).

9. Système de climatisation (1) selon l'une quelconque des revendications 1 à 8, **caractérisé en ce qu'**au moins l'autre composant du système de climatisation se compose en totalité ou en partie d'un matériau à base de matière plastique contenant des produits biocides, et l'évaporateur et / ou le chauffage, qui présente un matériau biocide, est en particulier recouvert d'un matériau biocide.
